# EUROPEAN PATENT APPLICATION

(11) **EP 0 876 070 A1**
(43) Date of publication of application: **04.11.1998**
(21) Application number: 98303042.0
(22) Date of filing: 21.04.1998
(51) Int. Cl.: H04Q 7/22

(54) **Method of controlling wireless unit operations depending on their geographical location**

(30) Priority: 30.04.1997 US 845968
(71) Applicant: LUCENT TECHNOLOGIES INC., Murray Hill, New Jersey 07974-0636 (US)
(72) Inventor: Hardouin, Larry J., Westminster, Colorado 80020 (US)
(74) Representative: Buckley, Christopher Simon Thirsk

(57) **Abstract**

In administering a wireless telecommunication switching system (101-110,112) in terms of geographical sub-areas (113-116), when a wireless unit (111) is inserted into a geographical sub-area, it inherits the attributes of that sub-area with respect to basic operations and features. The wireless units are wireless base stations. wireless handsets, or both. In addition, when basic operation or feature parameters are changed for a particular geographical area, the wireless base stations and wireless handsets operating within that geographical area automatically inherit the new attributes of the geographical area; hence, the parameters for the basic operations and features.

## Description

### Technical Field

This invention relates to wireless telecommunication switching systems and wireless handsets.

### Background of the Invention

The problem that faces administrators of personal communication service (PCS) wireless telecommunication systems is the administration of basic operations and features for a large number of wireless base stations that are utilized in a PCS wireless telecommunication system. Not only are there a large number of wireless base stations; but locations of these wireless base stations is in constant flux. The reason that the wireless base stations are constantly being relocated is that the wireless base stations operate on a low transmitting power and are very susceptible to changes in their environmental conditions, e.g., a new wall or other physical obstruction being placed within the service area of the PCS wireless telecommunication system. Also, in a PCS wireless telecommunication system that adapts for various operational conditions within the workplace, these operational conditions will change on a continuous basis.

### Summary of the Invention

This invention is directed to solving this problem and other disadvantages of the prior art. In accordance with the invention, a wireless telecommunication switching system is administered in terms of geographical sub-areas, and when a wireless unit is inserted into a geographical sub-area, it inherits the attributes of that sub-area with respect to basic operations and features. The wireless units are wireless base stations, wireless handsets, or both. In addition, when basic operation or feature parameters are changed for a particular geographical area, the wireless base stations and wireless handsets operating within that geographical area automatically inherit the new attributes of the geographical area; hence, the parameters for the basic operations and features.

Other and further aspects of the present invention will become apparent during the course of the following description and by reference to the accompanying drawing.

### Brief Description of the Drawing

FIG. 1 illustrates a wireless telecommunication switching system embodying the inventive concept;
FIG. 2 illustrates a table specifying parameters for geographical sub-areas;
FIG. 3 illustrates, in flow chart form, the steps performed by an administration computer in administering audio information parameters for wireless base stations;
FIG. 4 illustrates a table that details audio information for base stations within the wireless telecommunications system;
FIG. 5 illustrates, in flow chart form, the steps performed by system controller in adjusting audio information parameters for a wireless handset on the basis of a base station;
FIG. 6 illustrates, in block diagram form, a wireless telecommunication switching system;
FIG. 7 illustrates, in block diagram form, a wireless handset;
FIG. 8 illustrates a table specifying error numbers for geographical sub-areas;
FIG. 9 illustrates, in flow chart form, the steps performed by an administration computer in transmitting error numbers to wireless base stations; and
FIG. 10 illustrates, in flow chart form, the steps performed by a controller in a base station.

### Detailed Description

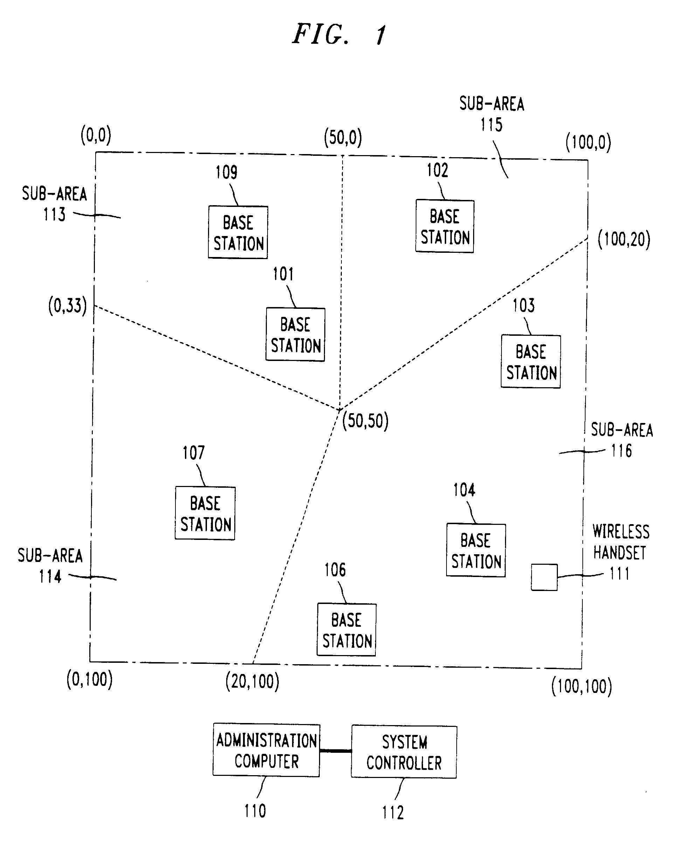

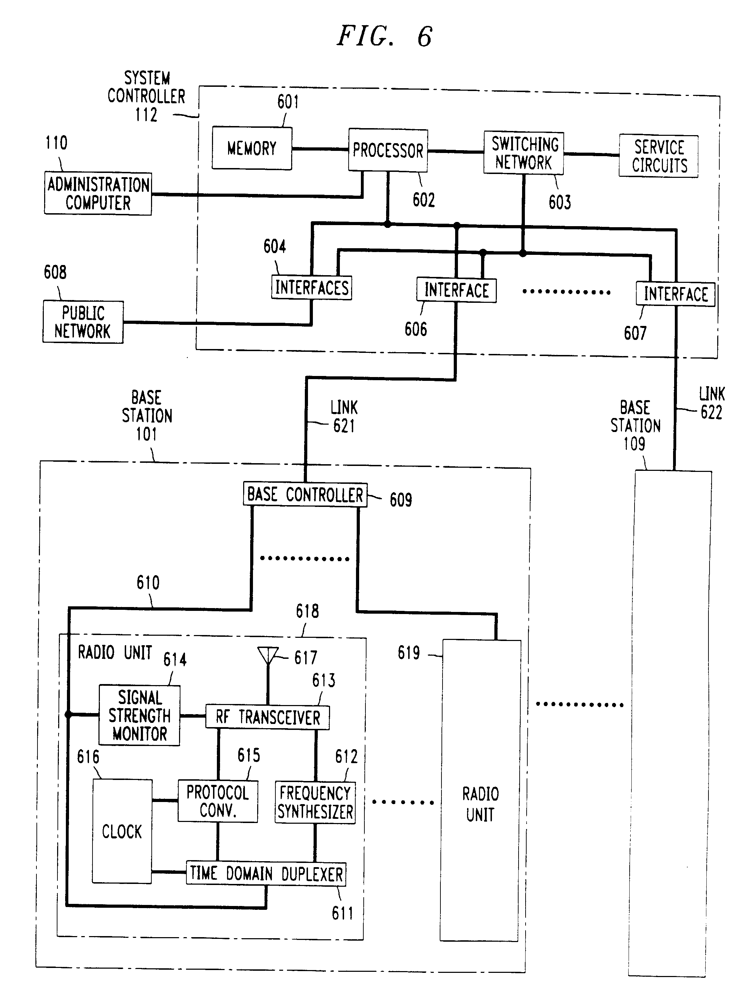

FIG. 1 illustrates a wireless telecommunication switching system having a plurality of base stations which are base stations 101-109. The area serviced by the wireless telecommunication switching system is subdivided into sub-areas 113-116. Each sub-area may have a plurality of base stations located within it. For example, sub-area 116 is serviced by base stations 103, 104, and 106. System controller 112 controls the operations of the base stations via communication links not illustrated in FIG. 1. Greater details of the wireless telecommunication system are illustrated in FIG. 6.

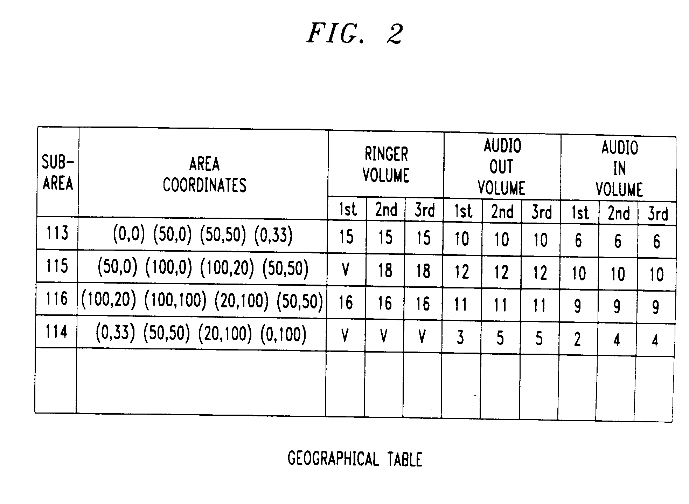

Administration computer 110 is utilized by the administrator of the wireless telecommunication switching system to specify the attributes of the sub-areas illustrated in FIG. 1. The system administrator utilizing administration computer 110 establishes a Geographical Table as illustrated in FIG. 2 which specifies audio information that will be transferred to a wireless handset when it becomes active within a sub-area. The audio information consists of controlling whether a ringer or mechanical vibrator will be utilized on a wireless handset for incoming call alerting. In addition, if the ringer is being utilized, the volume of the alerting signal is specified for the different sub-areas by time of day which is indicated as work shifts. In addition, the audio out and audio in volumes of the wireless handset are specified for each sub-area by work shifts. The area coordinates utilized in the Geographical Table of FIG. 2 are defined in FIG. 1. Within the Geographical Table of FIG. 2, if vibration alerting is to be utilized, the letter "V" is inserted into the Geographical Table.

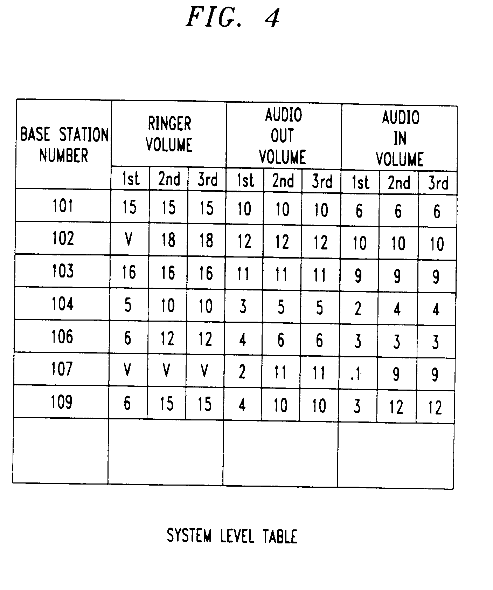

Administration computer 110 is responsive to the creation of the Geographical Table or a change to the Geographical Table to update a System Level Table maintained in system controller 112 and illustrated in FIG. 4. The System Level Table specifies the audio information on an individual base station basis. For example, the ringer volume for the first shift of sub-area 115 is specified to be vibration in the Geographical Table of FIG. 2. Consequently, base station 102 that services sub-area 115 has vibration alerting specified for the first shift in the System Level Table of FIG. 4. During operation of the wireless telecommunication system of FIG. 1, when wireless handset 111 registers on base station 102 or performs a handoff to base station 102, system controller 112 accesses the System Level Table of FIG. 4 and transmits to wireless handset 111 via base station 103 the audio information specified for base station 102 in the System Level Table of FIG. 4.

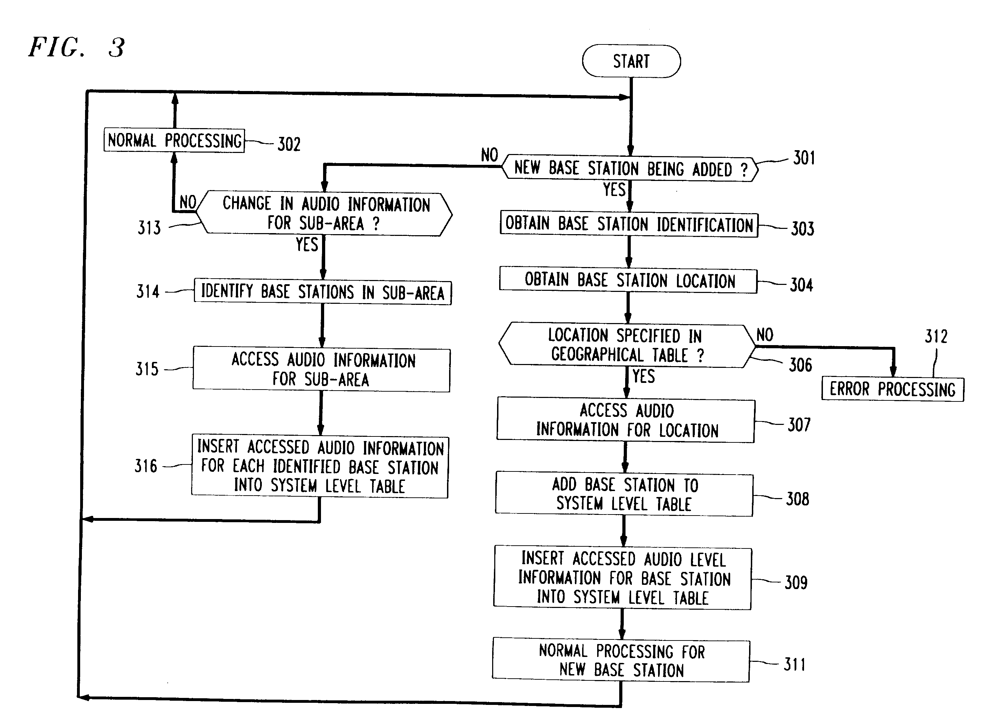

FIG. 3 illustrates the steps performed by administration computer 110 when a new base station is added to the wireless telecommunication switching system illustrated in FIG. 1. FIG. 2 illustrates the Geographical Table which is maintained by administration computer 110 of FIG. 1 and used in performing the steps of FIG. 3. Decision block 301 determines if a new base station is being added. If the answer is yes in decision block 301, block 303 obtains the base station identification from the system administrator, and block 304 obtains the location at which the new base station is to be installed. Decision block 306 then accesses the Geographical Table of FIG. 2 to determine if the location of the new base station is specified in this table. If the answer is no, block 312 performs error processing. If the answer is yes, block 307 accesses the Geographical Table to obtain the audio information for the new base station. Block 308 then adds the new base station into the System Level Table of FIG. 4. Block 309 then inserts the accessed audio information from the Geographical Table into the row provided in the System Level Table for the new base station. Block 311 performs the normal processing for a new base station before returning control back to decision block 301.

Returning to decision block 301, if the answer is no, control is transferred to decision block 313 that determines if the audio information for a sub-area as illustrated in the Geographical Table of FIG. 2 has been changed. If the answer is no, control is transferred to block 302 that performs normal processing before transferring control back to decision block 301. If the answer in decision block 313 is yes, block 314 accesses the Geographical Table and determines the base stations that service the sub-area whose audio information has been changed. Block 315 then accesses the audio information for the sub-area from the Geographical Table. Block 316 then inserts the accessed audio information for each of the base stations identified by block 314 into the System Level Table of FIG. 4. After execution of block 316, control is transferred back to decision block 301.

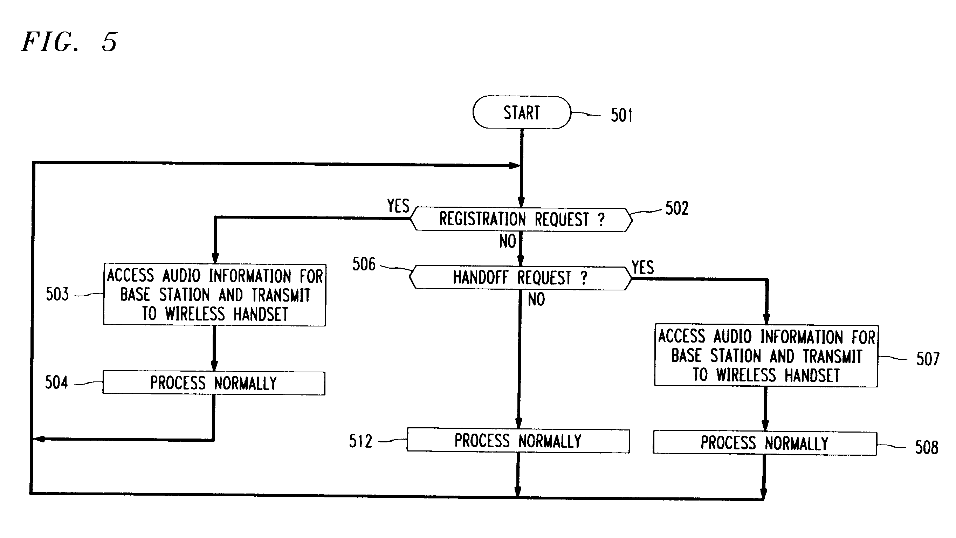

FIG. 5 illustrates, in flowchart form, the steps performed by processor 602 of FIG. 6 that controls system controller 112 of FIG. 1. After starting at block 501, decision block 502 determines if a registration request has been received from a wireless handset. If a registration request has been received from a wireless handset, block 503 accesses the System Level Table of FIG. 4 and transmits the audio information to the registering wireless handset for the base station on which the registration is being performed. Block 504 then processes the registration request in a normal manner before returning control back to decision block 502.

If the answer in decision block 502 is no, control is transferred to decision block 506. The latter decision block determines if a handoff request has been received from a wireless handset. If the answer is yes, block 507 accesses the System Level Table of FIG. 4 and transmits the audio information to the wireless handset performing the handoff for the base station. Block 508 then processes the handoff request in a normal manner before returning control back to decision block 502.

If the answer in decision block 506 is no, decision block 506 transfers control to block 512 which processes the wireless handset in a normal manner before returning control back to decision block 502.

FIG. 6 illustrates, in block diagram form, the wireless telecommunication system illustrated in FIG. 1. System controller 112 is under the control of processor 602 which executes programs and utilizes data stored in memory 601. System controller 112 interfaces to public network 608 via interfaces 604. System controller 112 is interconnected to base stations 101-109 via links 621-622 which terminate on interfaces 606-607. The switching of audio and data received via interfaces 606-607 is performed by switching network 603 under control of processor 602. Base station 101 illustrates in greater detail the composition of a base station. Each base station comprises a plurality of radio units 618-619 that are under the control of base controller 609. Base controller 609 is responsive to the message requesting that a wireless handset's transmission signal strength be interrogated to adjust the frequency of RF transceiver 613 to the channel used by the wireless handset by controlling frequency synthesizer 612 via time domain duplexer 611 and bus 610. Signal strength monitor 614 reports the relative signal strength of the wireless handset to base controller 609 via bus 610.

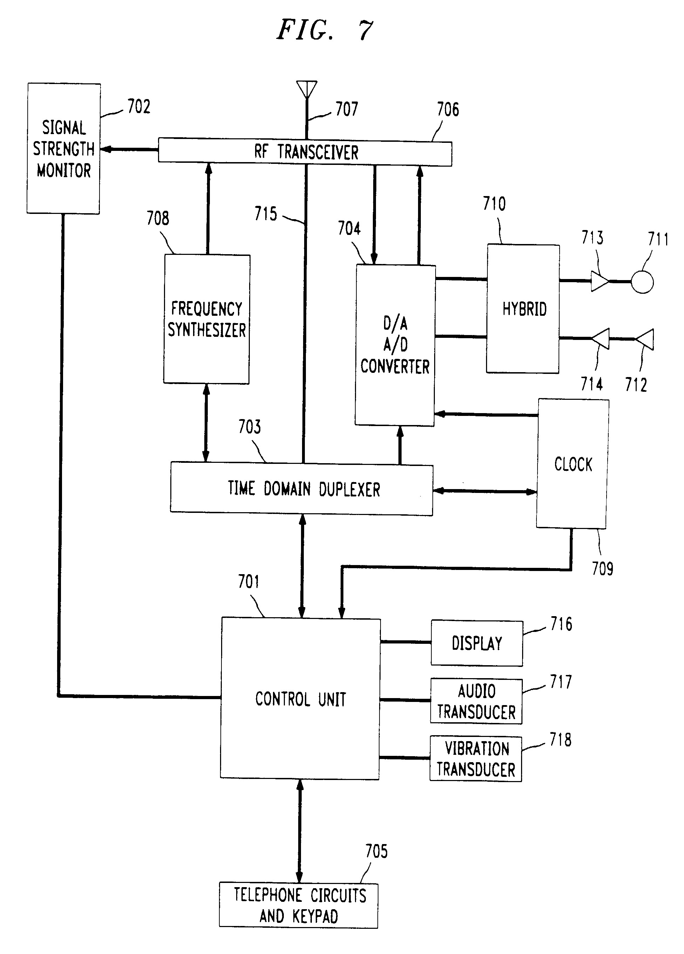

Wireless handset 111 is illustrated in greater detail in FIG. 7. Other wireless handsets are identical in design. Wireless handset 111 is implementing a wireless protocol that allows wireless handset 111 to maintain a wireless signal link with system controller 112 via the base stations in the cells. One air interface that can be used is the Japanese PHS protocol as set forth in "User-Network Interface and Inter-Network Interface Standards for PHS", the Telecommunication Technology Committee, 1995, and "Personal Handy Phone System RCR Standard", Version 1, RCR STD-28, December 20, 1993. The message set of the PHS protocol is similar to the ISDN message set. Overall control of the wireless handset is provided by control unit 701.
Units 702, 703, 706, 707, 708, and 709 provide the RF communication capabilities for the wireless handset. Elements 704, 710, and 711-714 provide the audio information received and transmitted to the user; whereas, elements 716-718 and 705 provide the basic user interface. Control unit 701 is responsive to ringer and audio volume control information received from a base station via elements 703, 706, and 707 to control amplifiers 713 and 714 to control the audio volumes and to control audio transducer 717 in accordance with the invention.

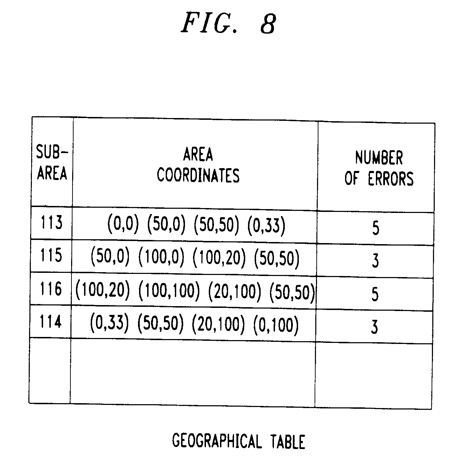

As previously noted, base stations can inherit parameters based on the sub-area in which the base stations are located. In the PHS protocol, if a base station receives an origination request or a handoff request from a wireless handset, the wireless base station will reject the request if the error rate during transmission of the request was too high. The environmental conditions of different sub-areas make it highly desirable for base stations operating within particular sub-areas to have different transmission error thresholds during origination or handoff requests before the requests are rejected. The Geographical Table of FIG. 8 illustrates the number of errors by sub-area for the system illustrated in FIG. 1. During system initialization, the number representing the number of errors in the Geographical Table is transmitted to each base station based on the particular sub-area in which each of the base stations is located. For example, upon system initialization, base station 102 receives from system controller 112 a "3" for the allowable number of errors based on the fact that base station 102 is located in sub-area 115. Administration computer 110 transfers this information to system controller 112 which then communicates itto base station 102. Similarly, changes to the Geographical Table of FIG. 8 or a new base station being added, also cause the numbers listed in the Geographical Table of FIG. 8 to be transmitted to the proper base station. One skilled in the art could readily envision that other operational parameters for wireless base stations could be administered on the basis of sub-areas.

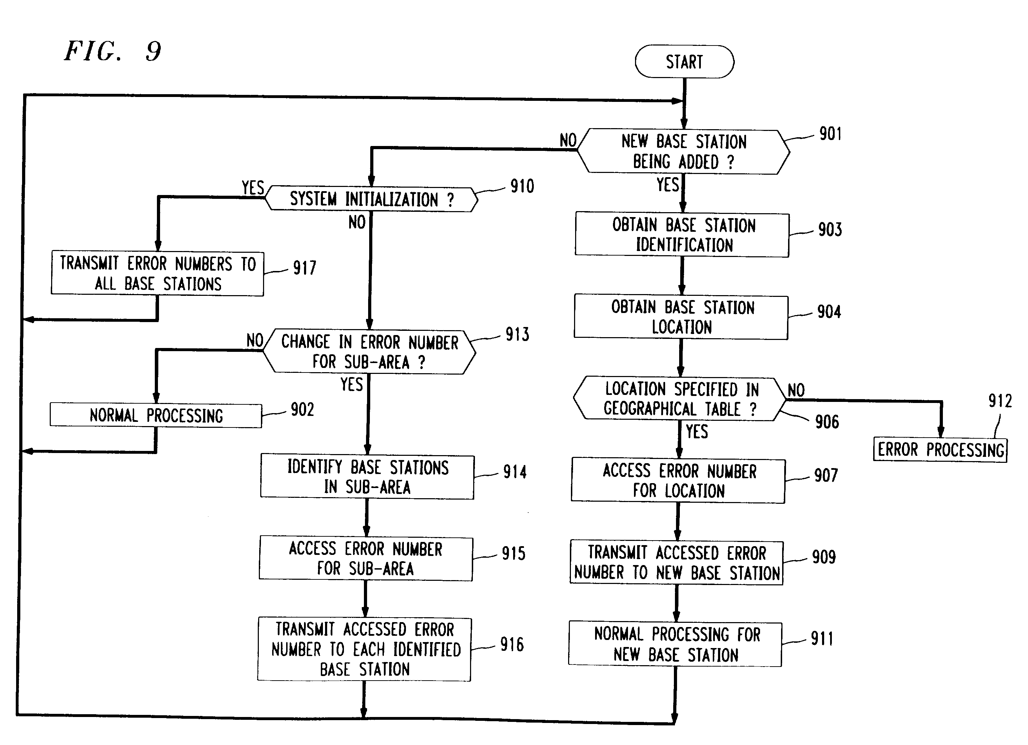

FIG. 9 illustrates the steps performed by administration computer 110 when a new base station is added, error numbers are changed, or a system initialization occurs. FIG. 8 illustrates the Geographical Table which is maintained by administration computer 110 of FIG. 1 and used in performing the steps of FIG. 9. Decision block 901 determines if a new base station is being added. If the answer is yes in decision block 901, block 903 obtains the base station identification from the system administrator, and block 904 obtains the location at which the new base station is to be installed. Decision block 906 then accesses the Geographical Table of FIG. 8 to determine if the location of the new base station is specified in this table. If the answer is no, block 912 performs error processing. If the answer is yes, block 907 accesses the Geographical Table to obtain the error number for the new base station. Block 909 then transmits the accessed error number to the new base station via system controller 112. Block 911 performs the normal processing for a new base station before returning control back to decision block 901.

Retuming to decision block 901, if the answer is no, control is transferred to decision block 910 that determines if a system initialization has occurred. If the answer is yes, block 917 transmits the error numbers to each of the base stations via system controller 112 before returning control to decision block 901. If the answer is no in decision block 910, control is transferred to decision block 913 that determines if the error number for a sub-area as illustrated in the Geographical Table of FIG. 8 has been changed. If the answer is no, control is transferred to block 902 that performs normal processing before transferring control back to decision block 901. If the answer in decision block 913 is yes, block 914 accesses the Geographical Table and determines the base stations that service the sub-area whose error number has been changed. Block 915 then accesses the error number for the sub-area from the Geographical Table. Block 916 then transmits the accessed error number to each of the base stations identified by block 914 via system controller 112. After execution of block 916, control is transferred back to decision block 901.

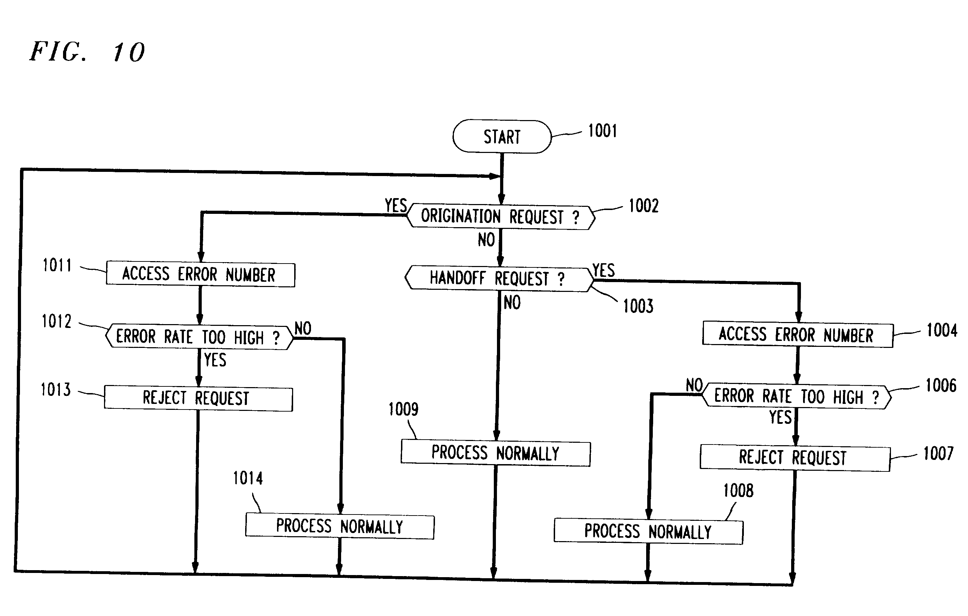

FIG. 10 illustrates, in flow chart form, the steps performed by a base controller of a wireless base station such as base controller 609 of FIG. 6. Each base controller is responsive to the transmission of the number of errors from administration computer 110 via system controller 112 to store this number. During operation of the base controller, decision block 1002 determines if an origination request has been received from a wireless handset. If the answer is no, control is transferred to decision block 1003 which determines if a handoff request has been received from a wireless handset. If the answer is yes, block 1004 accesses the stored error number, and decision block 1006 compares this error number against the number of errors that were received with the handoff request. If the error rate exceeds the error number, control is transferred to block 1007 which rejects the handoff request before transferring control to decision block 1002. This is done to assure that proper communication has been established between the wireless base station and the wireless handset. If the answer in decision block 1006 is no, then block 1008 processes the handoff request in the normal manner before transferring control to decision block 1002.

Returning to decision block 1003, if a handoff request has not been received, then control is transferred to block 1009 which performs normal processing before transferring control to decision block 1002.

Returning to decision block 1002, if the answer is yes, block 1011 accesses the stored error number. Decision block 1012 then determines if the error rate that occurred during the origination request exceed the error number. If the answer in decision block 1012 is yes, block 1013 rejects the origination request before transferring co ntrol to decision block 1002. If the answer in decision block 1012 is no, block 1014 does normal processing before transferring control back to decision block 1002.

## Claims

1. A method of controlling a wireless telecommunication switching system to service a plurality of sub-areas (113-116) and the wireless telecommunication switching system (101-110, 112) having a plurality of wireless units (111) in the plurality of sub-areas, comprising the steps of:
CHARACTERIZED IN THAT
specifying (313-316) control attributes for each of the plurality of sub-areas; and
inheriting (303-309) the control attributes of one of the plurality of sub-areas by each of the plurality of wireless units upon being located in the one of the plurality of sub-areas.

2. The method of claim 1 wherein the plurality of wireless units comprises a plurality of wireless handsets.

3. The method of claim 2 wherein the wireless telecommunication switching system further comprises a system controller and the step of specifying comprises step of storing (314, 316) the control attributes in the system controller.

4. The method of claim 3 wherein the step of inheriting comprises steps of determining (502, 506) the location of the one of plurality of wireless handsets;
accessing (503, 507) the stored control attributes for the one of plurality of sub-areas; and
communicating (503, 507) the accessed control attributes to the one of plurality of wireless handsets.

5. The method of claim 4 wherein the step of specifying further comprises the step of modify (316) the stored control attributes in response to a change in the control attributes.

6. The method of claim 5 wherein the plurality of wireless units further comprise a plurality of wireless base stations and the step of storing further comprises the steps of determining (314) for each of the plurality of base stations in which one of the plurality of sub-areas that each of the plurality of base stations is located;
arranging (316) the stored control attributes by base station; and
the step of determining the location of the one of the plurality of wireless handsets comprises detecting (502) when the one of the plurality of wireless handsets becomes active on one of the plurality of base stations.

7. The method of claim 4 wherein control attributes define audio control information.

8. The method of claim 1 wherein the plurality of wireless units comprises a plurality of base stations.

9. The method of claim 8 wherein the step of inheriting comprises steps of determining (903, 904) the location of the one of plurality of wireless base stations;
accessing (907) the control attributes for the one of plurality of sub-areas; and
communicating (909) the accessed control attributes to the one of plurality of wireless base stations.

10. The method of claim 9 wherein the wireless telecommunication switching system further comprises an adminstration computer and the step of specifying comprises step of storing the control attributes in the adminstration computer.

11. The method of claim 10 wherein the step of storing further comprises the steps of determining for each of the plurality of base stations in which one of the plurality of sub-areas that each of the plurality of base stations is located; and
arranging the stored control attributes by base station;

12. The method of claim 11 wherein the control attributes define an error rate.

13. Apparatus for effecting the steps of any preceding claim.
